# FASCICULE DE BREVET EUROPEEN

(11) **EP 3 368 381 B1**
(45) Date de publication et mention de la délivrance du brevet: **14.10.2020**
(21) Numéro de dépôt: 16809948.9
(22) Date de dépôt: 28.10.2016
(51) Int. Cl.: B60R 16/03, B60R 16/033, H02M 1/44, H04B 15/02, H02J 7/14

(54) **DISPOSITIF DE CONTRÔLE ACTIF POUR UN CIRCUIT ÉLECTRIQUE À CONVERTISSEUR DC/DC ET STOCKEUR D'ÉNERGIE ÉLECTRIQUE MONTÉS EN SÉRIE**
AKTIVSTEUERUNGSVORRICHTUNG FÜR EINE ELEKTRISCHE SCHALTUNG MIT EINEM GLEICHSPANNUNGSWANDLER UND EINEM IN REIHE GESCHALTETEN STROMSPEICHERSYSTEM
ACTIVE CONTROL DEVICE FOR AN ELECTRIC CIRCUIT WITH A DC/DC CONVERTER AND ELECTRICAL ENERGY STORAGE SYSTEM MOUNTED IN SERIES

(30) Priorité: 30.10.2015 FR 1560399
(43) Date de publication de la demande: 05.09.2018
(73) Titulaire: PSA AUTOMOBILES S.A., 78300 Poissy (FR)
(72) Inventeur: BOUCLY, Bernard, 78150 Le Chesnay (FR); COMTE, Raphael, 77380 Combs La Ville (FR)
(74) Mandataire: Jeannin, Laurent Jean-Pierre
(86) Numéro de dépôt international: PCT/FR2016/052814
(87) Numéro de publication internationale: WO 2017/072465

(56) Documents cités:
- EP-A2- 0 984 543
- WO-A1-98/19890
- WO-A1-2008/014944
- WO-A1-2012/156028
- WO-A1-2015/124560
- DE-A1-102011 012 958
- DE-A1-102011 056 270
- DE-A1-102014 207 390
- FR-A1- 2 995 154
- US-A1- 2011 260 544
- US-B1- 9 160 228

## Description

L'invention concerne les circuits électriques comprenant un générateur de courant connecté en parallèle à un réseau d'alimentation et à un convertisseur de type DC/DC et à découpage.

Dans certains domaines, comme par exemple celui des véhicules, éventuellement automobiles, on utilise un circuit électrique ayant un générateur de courant connecté en parallèle à un premier stockeur d'énergie électrique, à un réseau de consommation (comportant au moins un organe consommateur d'énergie électrique), et à un convertisseur de type DC/DC, à découpage, situé entre le premier stockeur d'énergie électrique et le réseau de consommation, et connecté en série à un second stockeur d'énergie électrique.

Le convertisseur est réversible afin de pouvoir fonctionner dans un mode « charge » destiné à fournir de l'énergie électrique au stockeur d'énergie électrique auquel il est connecté en série, et dans un mode « décharge » destiné à fournir au réseau d'alimentation de l'énergie électrique stockée dans le stockeur d'énergie électrique auquel il est connecté en série.

Comme le sait l'homme de l'art, en fonctionnement ce type de convertisseur induit des perturbations électromagnétiques dans le réseau d'alimentation, comme par exemple des surtensions, lesquelles sont néfastes pour certains organes consommateurs d'énergie électrique ou provoquent des variations de fonctionnement désagréables et/ou potentiellement dangereuses.

Afin de réduire ces perturbations, on équipe les convertisseurs d'un filtre passif, par exemple de type CLC (condensateur-inductance-condensateur). Hélas, ce filtre passif est volumineux, lourd et onéreux.

WO2015/124560 A1 divulgue un procédé de raccordement contrôlé de plusieurs branches du réseau de bord d'un véhicule. FR2995154A1 divulgue un circuit électrique d'un véhicule automobile.

L'invention a donc notamment pour but d'améliorer la situation.

Elle propose à cet effet un dispositif de contrôle destiné à équiper un circuit électrique comprenant un générateur de courant connecté en parallèle à un premier stockeur d'énergie électrique, à un réseau de consommation, comportant au moins un organe consommateur d'énergie électrique, et à un convertisseur de type DC/DC, à découpage, situé entre le premier stockeur d'énergie électrique et le réseau de consommation, et connecté en série à un second stockeur d'énergie électrique.

Ce dispositif de contrôle se caractérise par le fait qu'il comprend :
- un module d'interruption propre à être monté en série entre, d'une part, le générateur de courant et le premier stockeur d'énergie électrique, et, d'autre part, le convertisseur et le réseau de consommation, et comportant au moins deux moyens d'interruption, d'une part, comprenant chacun au moins un interrupteur principal à au moins trois états et une diode connectés en parallèle, et, d'autre part, connectés en série avec les diodes montées de façons opposées, et
- des moyens de contrôle agencés pour contrôler les états respectifs des interrupteurs principaux en fonction au moins de paramètres d'entrée que sont des mesures de tension effectuées de part et d'autre du module d'interruption, des consignes de fonctionnement des interrupteurs et du convertisseur, et un mode de transfert du convertisseur, afin de réduire des perturbations électromagnétiques induites par le convertisseur.

On dispose ainsi d'un dispositif de contrôle de type actif, peu volumineux, de poids réduit et peu onéreux.

Le dispositif de contrôle selon l'invention peut comporter d'autres caractéristiques qui peuvent être prises séparément ou en combinaison, et notamment :
- ses moyens de contrôle peuvent être agencés pour contrôler les états respectifs des interrupteurs principaux en fonction également d'au moins un paramètre d'entrée complémentaire choisi parmi (au moins) une consigne de tension aux bornes du réseau de consommation, une consigne de tension minimale aux bornes du réseau de consommation, une consigne de régulation du générateur de courant, un état en cours du circuit électrique, et une consigne de fonctionnement du dispositif de contrôle ;
- chaque interrupteur principal peut être un composant électronique de puissance de type MOSFET ;
- son module d'interruption peut également comprendre au moins un interrupteur auxiliaire à deux états et monté en parallèle de l'un au moins des interrupteurs principaux. Dans ce cas, ses moyens de contrôle peuvent être agencés pour contrôler l'état de cet interrupteur auxiliaire en fonction au moins d'une commande de fonctionnement de cet interrupteur auxiliaire qui leur est fournie ;
   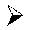 ses moyens de contrôle peuvent être agencés pour contrôler l'état de chaque interrupteur auxiliaire en fonction également d'au moins un paramètre d'entrée complémentaire choisi parmi (au moins) des informations de diagnostic relatives aux interrupteurs principaux, un état en cours du circuit électrique, et une consigne de fonctionnement du dispositif de contrôle ;
   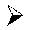 chaque interrupteur auxiliaire peut être par défaut placé dans un état fermé ;
   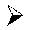 chaque interrupteur auxiliaire peut être un composant électronique de puissance de type relais électromécanique (qui est de préférence normalement fermé (ou passant)).

L'invention propose également un circuit électrique propre à équiper un système et comprenant, d'une part, un générateur de courant connecté en parallèle à un premier stockeur d'énergie électrique, à un réseau de consommation, comportant au moins un organe consommateur d'énergie électrique, et à un convertisseur de type DC/DC, à découpage, situé entre le premier stockeur d'énergie électrique et le réseau de consommation, et connecté en série à un second stockeur d'énergie électrique, et, d'autre part, un dispositif de contrôle du type de celui présenté ci-avant et monté en série entre, d'une part, le générateur de courant et le premier stockeur d'énergie électrique, et, d'autre part, le convertisseur et le réseau de consommation.

L'invention propose également un véhicule, éventuellement de type automobile, et comprenant au moins un circuit électrique du type de celui présenté ci-avant.

D'autres caractéristiques et avantages de l'invention apparaîtront à l'examen de la description détaillée ci-après, et des dessins annexés, sur lesquels :
- la figure 1 illustre schématiquement et fonctionnellement un exemple de réalisation de circuit électrique comprenant un dispositif de contrôle selon l'invention,
- les figures 2 à 7 illustrent schématiquement et fonctionnellement six exemples de réalisation différents d'un module d'interruption d'un dispositif de contrôle selon l'invention, et
- la figure 8 illustre schématiquement un premier diagramme d'évolution temporelle du courant (I_{RA}) circulant dans un réseau de consommation faisant partie d'un circuit électrique comportant un dispositif de contrôle selon l'invention et un convertisseur DC/DC comprenant un filtre passif réduit, et un deuxième diagramme d'évolution temporelle de la tension (U_{RA}) aux bornes de ce même réseau de consommation, et un troisième diagramme d'évolution fréquentielle de la transformée de Fourier rapide (ou FFT) de la tension (U_{RA}) aux bornes de ce même réseau de consommation.

L'invention a notamment pour but de proposer un dispositif de contrôle DC destiné à équiper un circuit électrique CE comportant au moins un générateur de courant GC, un (premier) réseau de consommation RA1, un convertisseur CV de type DC/DC et à découpage, et des premier SE1 et second SE2 stockeurs d'énergie électrique.

Dans ce qui suit, on considère, à titre d'exemple non limitatif, que le circuit électrique CE est destiné à équiper un véhicule, éventuellement de type automobile, comme par exemple une voiture. Mais l'invention n'est pas limitée à ce type d'application. En effet le circuit électrique CE peut équiper n'importe quel type de système, et notamment les véhicules (terrestres, maritimes (ou fluviaux) et aériens), et les installations, y compris de type industriel (par exemple les systèmes de sauvegarde d'alimentation).

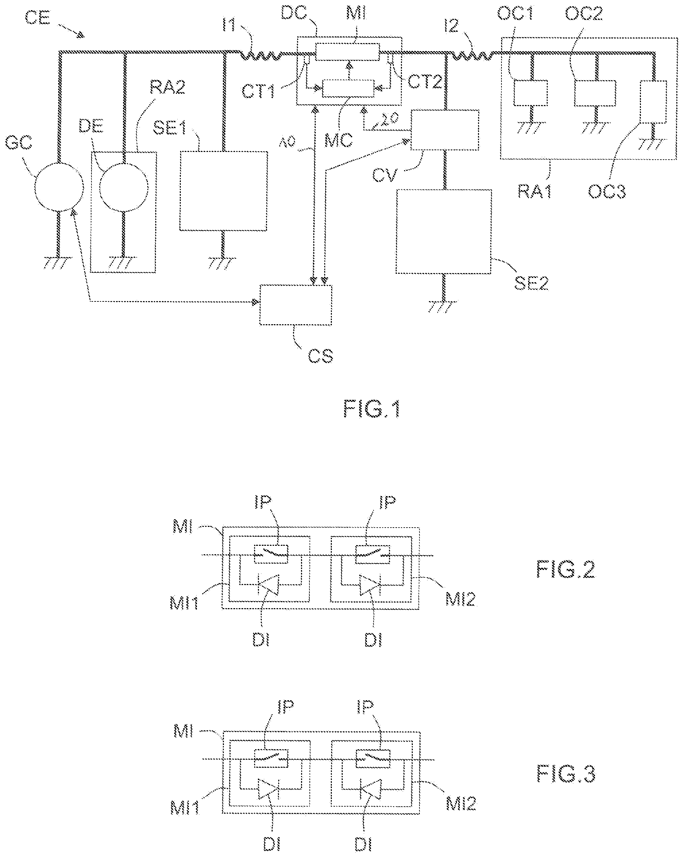

On a schématiquement représenté sur la figure 1 un exemple non limitatif de circuit électrique CE selon l'invention. Comme illustré, un tel circuit électrique CE comprend au moins un générateur de courant GC, un premier réseau de consommation RA1, un convertisseur CV, des premier SE1 et second SE2 stockeurs d'énergie électrique, et un dispositif de contrôle DC selon l'invention.

Le premier réseau de consommation RA1 comporte au moins un organe OCj consommateur d'énergie électrique. A titre d'exemple non limitatif, un organe OCj peut être un calculateur, un capteur, un combiné d'affichage, des essuie-glaces, une direction assistée électrique, un turbo compresseur électrique, des suspensions électriques, un moteur (ou machine) électrique, ou un système de gestion des arrêts/démarrages d'un moteur. On notera que dans l'exemple non limitatif illustré sur la figure 1, le premier réseau de consommation RA1 comporte trois organes OC1 à OC3 (j = 1 à 3). Mais il peut comporter n'importe quel nombre d'organes consommateurs d'énergie électrique, dès lors que ce nombre est supérieur ou égal à un (1).

Le générateur de courant GC est connecté en parallèle au premier stockeur d'énergie électrique SE1, au premier réseau de consommation RA1, et au convertisseur CV. Dans le cas d'un véhicule, il s'agit par exemple d'un alternateur ou d'un alterno-démarreur. On notera que si le générateur de courant GC est un alternateur, alors le circuit électrique CE comprend également un démarreur DE, monté en parallèle de l'alternateur GC, comme illustré non limitativement sur la figure 1.

On notera également, comme illustré non limitativement sur la figure 1, que le circuit électrique CE peut comprendre un second réseau de consommation RA2, d'une part, monté en parallèle entre le générateur de courant GC et le premier stockeur d'énergie électrique SE1, et, d'autre part, comportant au moins un organe consommateur d'énergie électrique (et notamment le démarreur DE).

Le premier stockeur d'énergie électrique SE1 est connecté en parallèle entre le générateur de courant GC et le convertisseur CV. Il s'agit, par exemple, d'une batterie principale, par exemple de type 12 V ou 24 V, chargée de fournir de l'énergie électrique au second réseau de consommation RA2 (et notamment ici au démarreur DE) ainsi qu'éventuellement au premier réseau de consommation RA1.

Le convertisseur CV est de type DC/DC (« courant continu/courant continu »), à découpage, et connecté en série au second stockeur d'énergie électrique SE2. Il est par ailleurs réversible afin de pouvoir fonctionner au moins en mode « charge », pour fournir de l'énergie électrique (par exemple produite par le générateur de courant GC) au second stockeur d'énergie électrique SE2, et en mode « décharge », pour fournir au premier réseau de consommation RA1 de l'énergie électrique stockée dans le second stockeur d'énergie électrique SE2. On notera que le convertisseur CV peut, par exemple, être de type dit « buck/boost » ou « FLYBACK » ou encore « FORWARD ». Par ailleurs, le convertisseur CV peut réaliser un découpage avec une fréquence de découpage fixe ou variable.

Le convertisseur CV comporte donc au moins un interrupteur de puissance. Lorsque le convertisseur CV prélève de la puissance, et donc est dans un mode de recharge (ou PWM), pour recharger le second stockeur d'énergie électrique SE2, le au moins un interrupteur commute entre une position ouverte et une position fermée.

Selon une caractéristique de l'invention, le circuit CE comporte une liaison 20 de données numérique ou analogique entre le convertisseur CV envoie et le dispositif de contrôle DC. Le convertisseur CV envoie, au dispositif de contrôle DC, la position (ouvert ou fermé) du au moins un interrupteur ou la commande adressé audit au moins interrupteur, par l'intermédiaire de la liaison 20 de données.

Le premier stockeur d'énergie électrique SE1 agit notamment comme filtre du premier réseau de consommation RA1 du fait de son important effet capacitif. Il est, par exemple, de type basse ou très basse tension, selon la structure du convertisseur CV. A titre d'exemple il peut être de type 12 V ou 24 V ou encore 48 V (et plus généralement de 12 V à 500 V). Egalement à titre d'exemple, il peut comprendre plusieurs ultra-condensateurs (par exemple trois ou cinq), montés en série.

Le dispositif de contrôle DC, selon l'invention, comprend au moins un module d'interruption MI et des moyens de contrôle MC.

Le module d'interruption MI est propre à être monté en série entre le générateur de courant GC et le convertisseur CV. Ce montage en série se fait de préférence via deux inductances I1 et I2 placées en série en amont et en aval du module d'interruption MI, comme illustré non limitativement sur la figure 1. On notera que sur la figure 1 les deux inductances I1 et I2 placées en série en amont et en aval du module d'interruption MI représentent les effets inductifs des câbles électriques du circuit électrique CE, et notamment du premier réseau de consommation RA1 et de l'éventuel second réseau de consommation RA2.

Ce module d'interruption MI comporte au moins deux moyens d'interruption Mlk qui comprennent chacun au moins un interrupteur principal IP à au moins trois états et une diode DI connectés en parallèle. Ces états sont l'état OFF (ou état ouvert (ou non passant)), l'état ON (ou état fermé (ou passant)), et au moins un état intermédiaire (ou état partiellement ouvert (ou partiellement passant)).

Par ailleurs, ces moyens d'interruption Mlk sont connectés en série en ayant leurs diodes DI respectives montées de façons opposées, comme illustré dans les deux variantes de réalisation des figures 2 et 3. Le module d'interruption MI constitue ainsi une résistance variable.

Cet agencement particulier du module d'interruption MI a plusieurs explications, qui peuvent éventuellement être associées.

Une première explication réside dans le fait que les moyens d'interruption Mlk peuvent être réalisés, comme on le verra plus loin, à partir de composants MOSFET qui comprennent intrinsèquement une diode en parallèle. Par conséquent, un seul moyen d'interruption Mlk ne peut interrompre le courant que dans un seul sens en raison de la conduction de sa diode, et donc il est utile de réaliser un montage de deux moyens d'interruption Mlk en opposition pour pouvoir interrompre le courant dans les deux sens.

Une deuxième explication réside dans le fait que lorsque l'on veut décharger le second stockeur d'énergie électrique SE2 seulement dans le premier réseau de consommation RA1, il faut un interrupteur avec sa diode qui empêche le retour de courant vers le second réseau de consommation RA2 (by-pass réalisé avec le second moyen d'interruption MI2). Un seul moyen d'interruption Mlk est ouvert (ici le premier MI1), tandis que le second moyen d'interruption MI2 est forcément fermé, afin d'obtenir un gain énergétique et une amélioration du rendement. La diode DI est une contrainte : si la tension du premier réseau de consommation RA1 s'écroule, le courant passera par la diode DI le temps de fermer l'interrupteur associé.

Une troisième explication réside dans le fait que pour réaliser la fonction de filtre actif, le second moyen d'interruption MI2 ne suffit pas car il ne peut filtrer que 0,7 V au maximum en raison de la diode DI qui est montée en parallèle de l'interrupteur principal dans le second moyen d'interruption MI2. Il est donc nécessaire d'ajouter le premier moyen d'interruption MI1 (interrupteur principal IP avec sa diode DI), afin de l'utiliser en mode ouvert/fermé (ou « OFF/ON ») et en mode linéaire (résistance variable) lorsque le courant circule du premier moyen d'interruption MI1 vers le second moyen d'interruption MI2.

Une quatrième explication réside dans le fait que les diodes sont en plus des contraintes de sûreté de fonctionnement.

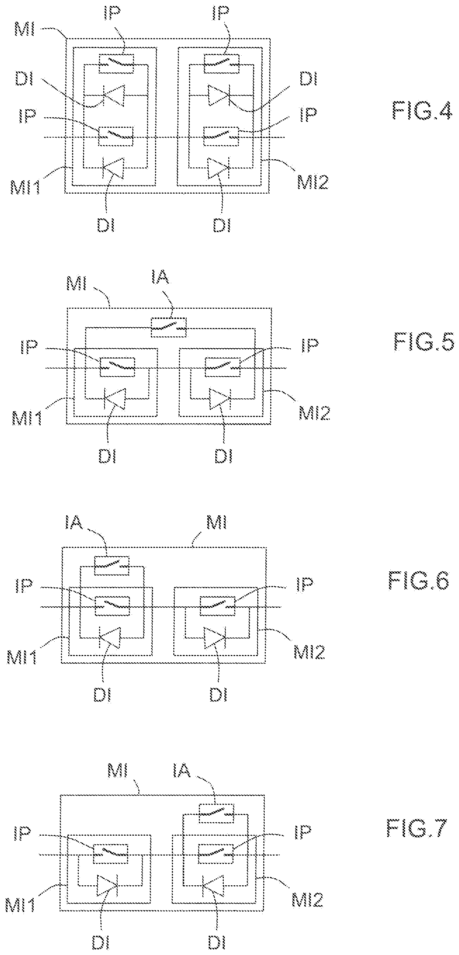

On notera, comme illustré non limitativement dans la variante de réalisation de la figure 4, que l'un au moins des moyens d'interruption Mlk peut éventuellement comprendre au moins deux paires constituées chacune d'un interrupteur principal IP et d'une diode DI, agencées de la même façon, et connectées en parallèle. Cela permet d'augmenter la capacité de coupure et de conduction de courant.

Par exemple, chaque interrupteur principal IP peut être un composant électronique de puissance de type MOSFET, et dont l'état (ouvert, fermé ou partiellement ouvert) dépend d'une commande de tension.

On notera également, comme illustré non limitativement dans les variantes de réalisation des figures 5 à 7, que le module d'interruption MI peut éventuellement comprendre, en complément, au moins un interrupteur auxiliaire IA à deux états et monté en parallèle de l'un au moins de ses interrupteurs principaux IP. Ces états sont l'état ON (ou état fermé (ou passant)), et l'état OFF (ou état ouvert (ou non passant)).

Cette option à plusieurs intérêts. En effet, certains consommateurs du premier réseau de consommation RA1 devant être alimentés lorsque le véhicule est dans son état de veille, l'interrupteur auxiliaire IA doit être fermé lors de la veille du véhicule pour que cette alimentation puisse se faire. Par ailleurs, cela permet de pallier une éventuelle défaillance des interrupteurs principaux IP (si tous les interrupteurs principaux IP sont hors service, il n'est plus possible d'alimenter le premier réseau de consommation RA1 et donc il faut un interrupteur auxiliaire IA de secours).

Dans la variante de réalisation de la figure 5, un interrupteur auxiliaire IA est monté en parallèle avec les deux moyens d'interruption Mlk. Dans la variante de réalisation de la figure 6, un interrupteur auxiliaire IA est monté en parallèle avec le seul premier moyen d'interruption MI1. Dans la variante de réalisation de la figure 7, un interrupteur auxiliaire IA est monté en parallèle avec le seul second moyen d'interruption MI2. L'interrupteur auxiliaire IA permet de faire passer un courant de faible intensité lorsque les deux moyens d'interruption Mlk sont ouverts, par exemple lorsque le convertisseur CV est dans un mode repos.

L'exemple de la figure 5 permet de couvrir toutes les défaillances, car on peut « shunter » les deux moyens d'interruption Mlk au moyen de l'interrupteur auxiliaire IA.

Dans les exemples des figures 6 et 7, on ne court-circuite que le moyen d'interruption Mlk qui empêche une circulation du courant. En effet, si un interrupteur principal IP est ouvert, la cathode de la diode DI associée est connectée du côté du stockeur d'énergie.

De préférence, chaque interrupteur auxiliaire IA est par défaut placé dans un état fermé (ou passant), afin de faire passer un courant de veille dans le premier réseau de consommation RA1 dans le mode veille (ou repos). Ainsi, dès que l'interrupteur auxiliaire IA n'est plus alimenté, il se ferme et permet d'alimenter le premier réseau de consommation RA1. De plus, lorsque le véhicule est en veille, un interrupteur normalement fermé ne consomme pas de courant (et donc n'induit pas de décharge d'un stockeur).

Par ailleurs, chaque interrupteur auxiliaire IA peut être un relais électromécanique.

Les moyens de contrôle MC sont agencés pour contrôler les états respectifs des interrupteurs principaux IP en fonction au moins de paramètres d'entrée que sont des mesures de tension V1 et V2 effectuées de part et d'autre du module d'interruption MI, des consignes de fonctionnement des interrupteurs principaux IP et du convertisseur CV, et un mode de transfert du convertisseur CV. Ce contrôle des états du module d'interruption MI permet de faire varier la résistance variable de ce dernier (MI) pendant les instants de découpage du convertisseur CV, notamment lorsque ce dernier (CV) prélève de la puissance sur le générateur de courant GC, et donc permet de réduire les variations de tension et par conséquent les perturbations électromagnétiques induites par le convertisseur CV lorsqu'il fonctionne. Ce contrôle des états se fait au moyen de commandes (de tension dans le cas de MOSFETs) déterminées par les moyens de contrôle MC en fonction au moins des paramètres d'entrée mentionnés plus haut, de manière à tenir compte des contraintes de dynamique et de temps de réponse et ainsi garantir les performances désirées.

Les mesures de tension V1 et V2 sont effectuées par des capteurs de tension CT1 et CT2, respectivement en amont et en aval du module d'interruption MI. Dans l'exemple illustré non limitativement sur la figure 1, les capteurs de tension CT1 et CT2 font partie du dispositif de contrôle DC. Mais cela n'est pas obligatoire. Ils pourraient en effet être externes au dispositif de contrôle DC et chargés de fournir des mesures de tension à un autre équipement du système (ici un véhicule). Cette externalisation n'est cependant pas optimale car elle augmente le temps de réponse et nécessite des interfaces avec l'extérieur.

Les consignes de fonctionnement des différents interrupteurs principaux IP sont fournies par un calculateur de supervision CS qui est chargé de superviser le fonctionnement du système (ici un véhicule), et en particulier de son circuit électrique CE.

La consigne de fonctionnement du convertisseur CV peut être fournie par ce dernier (CV). Elle peut être accompagnée de son état de fonctionnement. Cette consigne de fonctionnement est, par exemple, la commande dite « à modulation de largeur d'impulsion » (ou PWM (pour « Pulse Width Modulation »)). Elle est notamment utilisée par les moyens de contrôle MC pour déterminer les bonnes consignes à fournir au module d'interruption MI et les phases pendant lesquelles le dispositif de contrôle DC est actif.

Le mode de transfert du convertisseur CV peut être fourni par le calculateur de supervision CS. Il s'agit d'une information signalant si le convertisseur CV est dans son mode de charge, ou dans son mode de décharge, ou encore à l'arrêt (et donc ni en charge ni en décharge).

On notera que les moyens de contrôle MC peuvent être agencés pour contrôler les états respectifs des différents interrupteurs principaux IP en fonction également d'au moins un paramètre d'entrée complémentaire choisi parmi au moins une consigne de tension U_{RA} aux bornes du premier réseau de consommation RA1, une consigne de tension minimale U_{RAmin} aux bornes du premier réseau de consommation RA1, une consigne de régulation du générateur de courant GC, un état en cours du circuit électrique CE, et une consigne de fonctionnement du dispositif de contrôle DC.

Avantageusement, le circuit CE comporte une liaison 10 de données numérique ou analogique entre le calculateur de supervision CS et le dispositif de contrôle DC. Le mode de transfert du convertisseur CV peut être fourni par le calculateur de supervision CS au dispositif de contrôle DC par l'intermédiaire de la liaison 10 de données.

La consigne de tension U_{RA} aux bornes du premier réseau de consommation RA1 est fournie par le calculateur de supervision CS. Comme on le verra plus loin, elle est utilisée par les moyens de contrôle MC lorsque le dispositif de contrôle DC est actif.

La consigne de tension minimale U_{RAmin} aux bornes du premier réseau de consommation RA1 est fournie par le calculateur de supervision CS. Comme on le verra plus loin, elle est également utilisée par les moyens de contrôle MC lorsque le dispositif de contrôle DC est actif (c'est-à-dire tant que l'on a V2 > U_{RAmin}).

La consigne de régulation du générateur de courant GC est une information de contrôle qui est utilisée comme information redondante par rapport à V1.

L'état en cours du circuit électrique CE est fourni par le calculateur de supervision CS. Il sert à réveiller / mettre en veille le dispositif de contrôle DC, et dépend du type d'alimentation utilisé.

La consigne de fonctionnement du dispositif de contrôle DC est fournie par le calculateur de supervision CS qui est notamment chargé de déterminer si le dispositif de contrôle DC peut être actif ou non.

On notera que lorsque le module d'interruption MI comprend au moins un interrupteur auxiliaire IA, les moyens de contrôle MC sont agencés pour contrôler l'état de cet interrupteur auxiliaire IA en fonction au moins d'une commande de fonctionnement d'interrupteur auxiliaire IA. Cette (chaque) commande de fonctionnement d'interrupteur auxiliaire IA est fournie par le calculateur de supervision CS.

On notera également que les moyens de contrôle MC peuvent être agencés pour contrôler l'état de chaque interrupteur auxiliaire IA en fonction également d'au moins un paramètre d'entrée complémentaire choisi parmi au moins des informations de diagnostic relatives aux interrupteurs principaux IP, l'état en cours du circuit électrique CE, et la consigne de fonctionnement du dispositif de contrôle DC.

Les informations de diagnostic relatives aux interrupteurs principaux IP sont connues en interne par les moyens de contrôle MC.

Lorsque les moyens de contrôle MC disposent de tous les paramètres d'entrée et paramètres d'entrée complémentaires mentionnés précédemment, et que le module d'interruption MI ne comprend que deux interrupteurs principaux IP et un interrupteur auxiliaire IA, ils peuvent déterminer les commandes (de tension dans le cas de MOSFETs) comme suit, à titre d'exemple non limitatif.

Si V2 < U_{RA} :
- la commande de tension CM1 du premier interrupteur principal IP du premier moyen d'interruption MI1 peut être égale à la consigne de fonctionnement CF1 de ce premier interrupteur principal IP,
- la commande de tension CM2 du second interrupteur principal IP du second moyen d'interruption MI2 peut être égale à la consigne de fonctionnement CF2 de ce second interrupteur principal IP, et
- la commande de tension CM3 de l'interrupteur auxiliaire IA peut être égale à la consigne de fonctionnement CF3 de cet interrupteur auxiliaire IA.

Si V2 > U_{RA} :
- la commande de tension CM1 du premier interrupteur principal IP du premier moyen d'interruption MI1 peut être égale à une fonction ayant comme variables CF1, l'état en cours du circuit électrique CE, le mode de transfert du convertisseur CV, la consigne de régulation du générateur de courant GC, U_{RA}, U_{RAmin}, la consigne de régulation du générateur de courant GC, V1 et V2,
- la commande de tension CM2 du second interrupteur principal IP du second moyen d'interruption MI1 peut être égale à une fonction ayant comme variables CF2, l'état en cours du circuit électrique CE, le mode de transfert du convertisseur CV, la consigne de régulation du générateur de courant GC, U_{RA}, U_{RAmin}, la consigne de régulation du générateur de courant GC, V1 et V2, et
- la commande de tension CM3 de l'interrupteur auxiliaire IA peut imposer soit l'état ON (ou état fermé (ou passant)), soit l'état OFF (ou état ouvert (ou non passant)).

Si V2 < U_{RAmin} (et donc si le dispositif de contrôle DC est inactif) :
- la commande de tension CM1 du premier interrupteur principal IP du premier moyen d'interruption MI1 peut être égale à CF1,
- la commande de tension CM2 du second interrupteur principal IP du second moyen d'interruption MI1 peut être égale à CF2, et
- la commande de tension CM3 de l'interrupteur auxiliaire IA peut être égale à CF3.

Lorsque le convertisseur CV est en mode recharge, le dispositif de contrôle DC est actif et :
- la commande de tension CM1 du premier interrupteur principal IP du premier moyen d'interruption MI1 peut être égale à une fonction ayant comme variables CF1, le mode de transfert du convertisseur CV, et la consigne de régulation du générateur de courant GC,
- la commande de tension CM2 du second interrupteur principal IP du second moyen d'interruption MI1 peut être égale à une fonction ayant comme variables CF2, le mode de transfert du convertisseur CV, et la consigne de régulation du générateur de courant GC, et
- la commande de tension CM3 de l'interrupteur auxiliaire IA peut imposer soit l'état ON (ou état fermé (ou passant)), soit l'état OFF (ou état ouvert (ou non passant)).

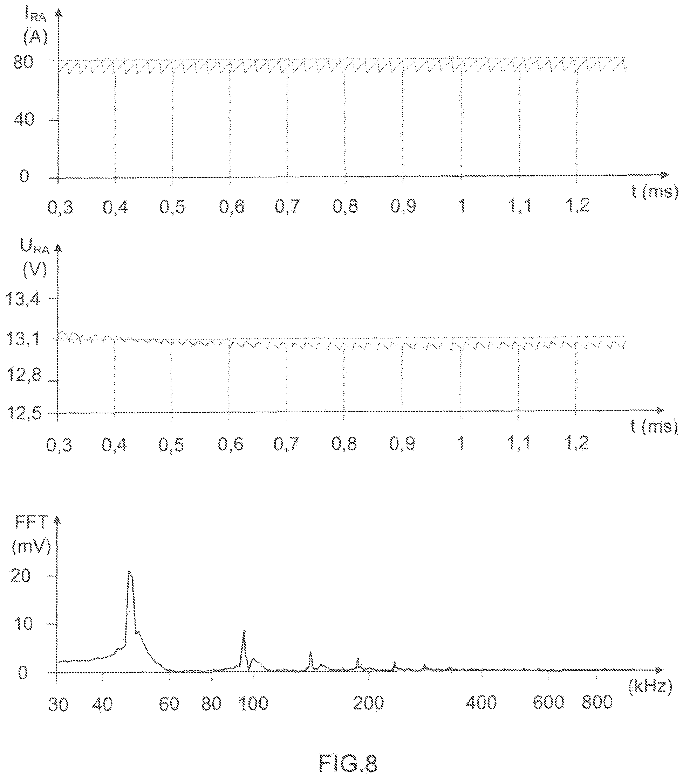

On a schématiquement représenté sur la figure 8 les conséquences de la présence d'un dispositif de contrôle DC selon l'invention en combinaison avec un filtre passif réduit dans le convertisseur CV, dans un circuit électrique CE du type de celui illustré sur la figure 1. On entend ici par « filtre passif réduit » un filtre passif de faible poids, faible volume et faible coût du fait de ses caractéristiques physiques. Par exemple, il s'agit d'un filtre de type CLC (100µF, 100 nH, 100µF). Le premier diagramme (en haut) illustre l'évolution temporelle (t en ms) du courant I_{RA} circulant dans le premier réseau de consommation RA1, le deuxième diagramme (au milieu) illustre l'évolution temporelle (t en ms) de la tension U_{RA} aux bornes de ce même premier réseau de consommation RA1, et le troisième diagramme (en bas) illustre l'évolution fréquentielle (f en kHz) de la transformée de Fourier rapide (ou FFT) de la tension U_{RA} aux bornes de ce même premier réseau de consommation RA1.

L'agencement décrit dans le paragraphe précédent permet de réduire d'un facteur égal à environ 2 sur la FFT l'amplitude des perturbations induites dans le même circuit électrique CE en présence d'un filtre passif utilisé dans l'art antérieur et donc non réduit (par exemple de type CLC (3mF, 200 nH, 3mF)).

## Revendications

1. Dispositif de contrôle (DC) pour un circuit électrique (CE) comprenant un générateur de courant (GC) connecté en parallèle à un premier stockeur d'énergie électrique (SE1), à un réseau de consommation (RA1), comportant au moins un organe (OCj) consommateur d'énergie électrique, et à un convertisseur (CV) de type DC/DC, à découpage, situé entre ledit premier stockeur d'énergie électrique (SE1) et ledit réseau de consommation (RA1), et connecté en série à un second stockeur d'énergie électrique (SE2), comprenant i) un module d'interruption (MI) propre à être monté en série entre, d'une part, ledit générateur de courant (GC) et ledit premier stockeur d'énergie électrique (SE1), et, d'autre part, ledit convertisseur (CV) et ledit réseau de consommation (RA1), et comportant au moins deux moyens d'interruption (Mlk), d'une part, comprenant chacun au moins un interrupteur principal (IP) à au moins trois états et une diode (DI) connectés en parallèle, et, d'autre part, connectés en série avec lesdites diodes (DI) montées de façons opposées, et ii) des moyens de contrôle (MC) agencés pour contrôler les états respectifs desdits interrupteurs principaux (IP) en fonction au moins de paramètres d'entrée que sont des mesures de tension effectuées de part et d'autre dudit module d'interruption (MI), des consignes de fonctionnement desdits interrupteurs principaux (IP) et dudit convertisseur (CV), et un mode de transfert dudit convertisseur (CV), afin de réduire des perturbations électromagnétiques induites par ledit convertisseur (CV).

2. Dispositif selon la revendication 1, **caractérisé en ce que** lesdits moyens de contrôle (MC) sont agencés pour contrôler les états respectifs desdits interrupteurs principaux (IP) en fonction également d'au moins un paramètre d'entrée complémentaire choisi dans un groupe comprenant une consigne de tension aux bornes dudit réseau de consommation (RA1), une consigne de tension minimale aux bornes dudit réseau de consommation (RA1), une consigne de régulation dudit générateur de courant (GC), un état en cours dudit circuit électrique (CE), et une consigne de fonctionnement dudit dispositif de contrôle (DC).

3. Dispositif selon l'une des revendications 1 et 2, **caractérisé en ce que** chaque interrupteur principal (IP) est un composant électronique de puissance de type MOSFET.

4. Dispositif selon l'une des revendications 1 à 3, **caractérisé en ce que** ledit module d'interruption (MI) comprend en outre au moins un interrupteur auxiliaire (IA) à deux états et monté en parallèle de l'un au moins desdits interrupteurs principaux (IP), et **en ce que** lesdits moyens de contrôle (MC) sont agencés pour contrôler l'état dudit interrupteur auxiliaire (IA) en fonction au moins d'une commande de fonctionnement dudit interrupteur auxiliaire (IA) qui leur est fournie.

5. Dispositif selon la revendication 4, **caractérisé en ce que** lesdits moyens de contrôle (MC) sont agencés pour contrôler l'état de chaque interrupteur auxiliaire (IA) en fonction également d'au moins un paramètre d'entrée complémentaire choisi dans un groupe comprenant des informations de diagnostic relatives auxdits interrupteurs principaux (IP), un état en cours dudit circuit électrique (CE), et une consigne de fonctionnement dudit dispositif de contrôle (DC).

6. Dispositif selon l'une des revendications 4 et 5, **caractérisé en ce que** chaque interrupteur auxiliaire (IA) est par défaut placé dans un état fermé.

7. Dispositif selon l'une des revendications 4 à 6, **caractérisé en ce que** chaque interrupteur auxiliaire (IA) est un relais électromécanique.

8. Circuit électrique (CE) propre à équiper un système et comprenant un générateur de courant (GC) connecté en parallèle à un premier stockeur d'énergie électrique (SE1), à un réseau de consommation (RA1), comportant au moins un organe (OCj) consommateur d'énergie électrique, et à un convertisseur (CV) de type DC/DC, à découpage, situé entre ledit premier stockeur d'énergie électrique (SE1) et ledit réseau de consommation (RA1), et connecté en série à un second stockeur d'énergie électrique (SE2), **caractérisé en ce qu'**il comprend en outre un dispositif de contrôle (DC) selon l'une des revendications précédentes, monté en série entre, d'une part, ledit générateur de courant (GC) et ledit premier stockeur d'énergie électrique (SE1), et, d'autre part, ledit convertisseur (CV) et ledit réseau de consommation (RA1).

9. Véhicule, **caractérisé en ce qu'**il comprend au moins un circuit électrique (CE) selon la revendication 8.

10. Véhicule selon la revendication 9, **caractérisé en ce qu'**il est de type automobile.

## Patentansprüche

1. Steuervorrichtung (DC) für eine elektrische Schaltung (CE), die einen Stromgenerator (GC) aufweist, der parallel zu einem ersten elektrischen Energiespeicher (SE1), zu einem Verbrauchsnetz (RA1), das mindestens ein elektrisches Energieverbrauchselement (OCj) aufweist, und zu einem DC/DC-Umschaltwandler (CV) geschaltet ist, der zwischen dem ersten elektrischen Energiespeicher (SE1) und dem Verbrauchsnetz (RA1) angeordnet ist, und in Reihe mit einer zweiten elektrischen Energiespeichervorrichtung (SE2) geschaltet ist, mit i) einem Unterbrechungsmodul (MI), das geeignet ist, in Reihe zwischen einerseits dem Stromgenerator (GC) und der ersten elektrischen Energiespeichervorrichtung (SE1) und andererseits dem Wandler (CV) und dem Verbrauchsnetz (RA1) geschaltet zu werden, und mit mindestens zwei Unterbrechungsmitteln (Mlk), die einerseits jeweils mindestens einen Hauptschalter (IP) mit mindestens drei Zuständen und eine Diode (DI), die parallel geschaltet sind, und andererseits in Reihe mit den genannten, entgegengesetzt montierten Dioden (DI) geschaltet sind, und ii) Steuermittel (MC), die so angeordnet sind, dass sie die jeweiligen Zustände der Hauptschalter (IP) in Abhängigkeit zumindest von Eingangsparametern steuern, bei denen es sich um Spannungsmessungen, die auf beiden Seiten des Unterbrechermoduls (MI) vorgenommen werden, um Betriebsanweisungen der Hauptschalter (IP) und des Wandlers (CV) und um einen Übertragungsmodus des Wandlers (CV) handelt, um elektromagnetische Störungen, die durch den Wandler (CV) induziert werden, zu reduzieren.

2. Vorrichtung nach Anspruch 1, **dadurch gekennzeichnet, dass** die Steuermittel (MC) angeordnet sind, um die jeweiligen Zustände der Hauptschalter (IP) auch in Abhängigkeit von mindestens einem komplementären Eingangsparameter zu steuern, der aus einer Gruppe ausgewählt ist, die einen Spannungssollwert an den Anschlüssen des Verbrauchsnetzes (RA1), einen Mindestspannungssollwert an den Anschlüssen des Verbrauchsnetzes (RA1), einen Regelungssollwert des Stromgenerators (GC), einen aktuellen Zustand der elektrischen Schaltung (CE) und einen Betriebssollwert der Steuervorrichtung (DC) umfasst.

3. Vorrichtung nach einem der Ansprüche 1 und 2, **dadurch gekennzeichnet, dass** jeder Hauptschalter (IP) ein leistungselektronisches Bauelement vom MOSFET-Typ ist.

4. Vorrichtung nach einem der Ansprüche 1 bis 3, **dadurch gekennzeichnet, dass** das Unterbrechungsmodul (MI) außerdem mindestens einen Hilfsschalter (IA) mit zwei Zuständen umfasst, der parallel zu mindestens einem der Hauptschalter (IP) geschaltet ist, und dass die Steuermittel (MC) so angeordnet sind, dass sie den Zustand des Hilfsschalters (IA) in Abhängigkeit von mindestens einem ihnen zugeführten Betriebsbefehl des Hilfsschalters (IA) steuern.

5. Vorrichtung nach Anspruch 4, **dadurch gekennzeichnet, dass** die Steuermittel (MC) so angeordnet sind, dass sie den Zustand jedes Hilfsschalters (IA) auch in Abhängigkeit von mindestens einem komplementären Eingangsparameter steuern, der aus einer Gruppe ausgewählt ist, die Diagnoseinformationen bezüglich der Hauptschalter (IP), einen aktuellen Zustand der elektrischen Schaltung (CE) und einen Betriebsbefehl der Steuervorrichtung (DC) umfasst.

6. Vorrichtung nach einem der Ansprüche 4 und 5, **dadurch gekennzeichnet, dass** jeder Hilfsschalter (IA) standardmäßig in einen geschlossenen Zustand versetzt ist.

7. Vorrichtung nach einem der Ansprüche 4 bis 6, **dadurch gekennzeichnet, dass** jeder Hilfsschalter (IA) ein elektromechanisches Relais ist.

8. Elektrische Schaltung (CE), die zur Ausrüstung eines Systems geeignet ist und einen Stromgenerator (GC) aufweist, der parallel zu einer ersten elektrischen Energiespeichervorrichtung (SE1), zu einem Verbrauchsnetz (RA1), das mindestens ein elektrisches Energieverbrauchsorgan (OCj) aufweist, und zu einem DC/DC-Umschaltwandler (CV) geschaltet ist, der zwischen der ersten elektrischen Energiespeichervorrichtung (SE1) und dem Verbrauchsnetz (RA1) angeordnet ist, und in Reihe mit einer zweiten elektrischen Energiespeichervorrichtung (SE2) geschaltet ist, **dadurch gekennzeichnet, dass** sie außerdem eine Steuervorrichtung (DC) gemäß einem der vorhergehenden Ansprüche umfasst, die in Reihe zwischen einerseits dem Stromgenerator (GC) und der ersten elektrischen Energiespeichervorrichtung (SE1) und andererseits dem Wandler (CV) und dem Verbrauchsnetz (RA1) geschaltet ist.

9. Fahrzeug, **dadurch gekennzeichnet, dass** es mindestens einen Stromkreis (CE) nach Anspruch 8 umfasst.

10. Ein Fahrzeug nach Anspruch 9, **dadurch gekennzeichnet, dass** es vom Automobiltyp ist.

## Claims

1. A control device (DC) for an electric circuit (CE) comprising a current generator (GC) connected in parallel to a first electric energy store (SE1), to a consumption network (RA1), comprising at least one electric energy consuming member (OCj), and to a DC/DC type switching converter (CV), located between said first electric energy store (SE1) and said consumption network (RA1), and connected in series to a second electrical energy storage device (SE2), comprising i) an interruption module (MI) suitable for being connected in series between, on the one hand, said current generator (GC) and said first electrical energy storage device (SE1) and, on the other hand, said converter (CV) and said consumption network (RA1), and comprising at least two interruption means (Mlk), on the one hand, each comprising at least one main switch (IP) with at least three states and a diode (DI) connected in parallel, and, on the other hand, connected in series with said diodes (DI) mounted in opposite ways, and ii) control means (MC) arranged to control the respective states of said main switches (IP) as a function of at least input parameters which are voltage measurements taken on either side of said interrupter module (MI), operating instructions of said main switches (IP) and of said converter (CV), and a transfer mode of said converter (CV), in order to reduce electromagnetic disturbances induced by said converter (CV).

2. Device according to claim 1, **characterised in that** said control means (MC) are arranged to control the respective states of said main switches (IP) as a function also of at least one complementary input parameter chosen from a group comprising a voltage setpoint at the terminals of said consumption network (RA1), a minimum voltage setpoint at the terminals of said consumption network (RA1), a regulation setpoint of said current generator (GC), a current state of said electric circuit (CE), and an operating setpoint of said control device (DC).

3. Device according to one of claims 1 and 2, **characterised in that** each main switch (IP) is a power electronic component of the MOSFET type.

4. A device according to one of claims 1 to 3, **characterised in that** said interrupter module (MI) further comprises at least one auxiliary switch (IA) with two states and connected in parallel with at least one of said main switches (IP), and **in that** said control means (MC) are arranged to control the state of said auxiliary switch (IA) according to at least one operating command of said auxiliary switch (IA) supplied thereto.

5. Device according to claim 4, **characterised in that** said control means (MC) are arranged to control the state of each auxiliary switch (IA) as a function also of at least one complementary input parameter chosen from a group comprising diagnostic information relating to said main switches (IP), a current state of said electrical circuit (CE), and an operating command of said control device (DC).

6. Device according to one of claims 4 and 5, **characterised in that** each auxiliary switch (IA) is by default placed in a closed state.

7. A device according to one of claims 4 to 6, **characterised in that** each auxiliary switch (IA) is an electromechanical relay.

8. An electrical circuit (CE) suitable for equipping a system and comprising a current generator (GC) connected in parallel to a first electrical energy storage device (SE1), to a consumption network (RA1), comprising at least one electrical energy consuming member (OCj), and to a DC/DC, switching converter (CV) of the DC/DC type, located between said first electrical energy storage device (SE1) and said consumption network (RA1), and connected in series to a second electrical energy storage device (SE2), **characterised in that** it further comprises a control device (DC) according to one of the preceding claims, connected in series between, on the one hand, said current generator (GC) and said first electrical energy storage device (SE1), and, on the other hand, said converter (CV) and said consumption network (RA1).

9. Vehicle, **characterised in that** it comprises at least one electric circuit (CE) according to claim 8.

10. A vehicle according to claim 9, **characterised in that** it is of the automobile type.
